(19) Europäisches Patentamt
European Patent Office
Office européen des brevets

(11) **EP 4 529 101 A1**

(12) **EUROPEAN PATENT APPLICATION**
published in accordance with Art. 153(4) EPC

(43) Date of publication:
**26.03.2025 Bulletin 2025/13**

(21) Application number: **23815219.3**

(22) Date of filing: **30.05.2023**

(51) International Patent Classification (IPC):
***H04L 25/02*** *(2006.01)*

(52) Cooperative Patent Classification (CPC):
**H04L 25/02**

(86) International application number:
**PCT/CN2023/097181**

(87) International publication number:
**WO 2023/232040 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.06.2022 CN 202210620651**

(71) Applicant: **Huawei Technologies Co., Ltd.
Shenzhen, Guangdong 518129 (CN)**

(72) Inventors:
• **PENG, Xiaohui
  Shenzhen, Guangdong 518129 (CN)**

• **LUO, Jiajin
  Shenzhen, Guangdong 518129 (CN)**
• **ZHOU, Baojian
  Shenzhen, Guangdong 518129 (CN)**
• **YAN, Min
  Shenzhen, Guangdong 518129 (CN)**
• **YANG, Xun
  Shenzhen, Guangdong 518129 (CN)**

(74) Representative: **Körber, Martin Hans
  Mitscherlich PartmbB
  Patent- und Rechtsanwälte
  Karlstraße 7
  80333 München (DE)**

(54) **COMMUNICATION METHOD AND COMMUNICATION APPARATUS**

(57) This application provides a communication method and a communication apparatus. The method includes: A first device determines path parameter group search range information and first information, where the first information indicates $K$ path parameter groups, and $K$ is an integer greater than 0; and the first device sends the path parameter group search range information and the first information to a second device, where the path parameter group search range information is used to correct the $K$ path parameter groups, and $K$ corrected path parameter groups are used for channel estimation. Based on the solution in embodiments of this application, pilot overheads can be reduced.

```
┌──────────────┐                          ┌──────────────┐
│ Second device│                          │ First device │
└──────────────┘                          └──────────────┘
       │                                         │
       │◄────────── S301: First information ──────│
       │                                         │
┌──────────────────────────────┐                 │
│ S302: Correct K path parameter│                 │
│ groups based on path parameter│                 │
│ group search range information,│                │
│ and perform channel estimation │                │
│ based on K corrected path      │                │
│ parameter groups               │                │
└──────────────────────────────┘                 │
       │                                         │
```

FIG. 3

EP 4 529 101 A1

**Description**

This application claims priority to Chinese Patent Application No. 202210620651.5, filed with the China National Intellectual Property Administration on June 2, 2022 and entitled "COMMUNICATION METHOD AND COMMUNICATION APPARATUS", which is incorporated herein by reference in its entirety.

**TECHNICAL FIELD**

This application relates to the field of communication technologies, and in particular, to a communication method and a communication apparatus.

**BACKGROUND**

After being transmitted by a transmit end, data arrives at a receive end through propagation of a radio channel. Various interference factors in the radio channel affect the transmitted data. Therefore, data received by the receive end may be greatly different from the data transmitted by the transmit end. Therefore, to mitigate impact of a propagation environment on data sending, channel estimation usually needs to be performed by using a pilot signal, and the data received by the receive end is further demodulated based on the channel estimation. Specifically, it is proposed in a conventional technology that a pilot signal known to the receive end may be transmitted while the data is transmitted. The receive end performs channel estimation based on a received pilot signal and the known pilot signal, and further demodulates the received data based on the channel estimation. However, this pilot signal sending manner increases pilot overheads.

**SUMMARY**

This application provides a communication method and a communication apparatus, to reduce pilot overheads.

According to a first aspect, this application provides a communication method. The method is applied to a first device, and the method includes: determining path parameter group search range information and first information, where the first information indicates K path parameter groups, and $K$ is an integer greater than 0; and sending the path parameter group search range information and the first information to a second device, where the path parameter group search range information is used to correct the $K$ path parameter groups, and $K$ corrected path parameter groups are used for channel estimation.

In this application, the first device sends, to the second device, the first information indicating the $K$ path parameter groups for channel estimation. In comparison with a conventional technology in which a pilot signal is sent while data is sent to perform channel estimation, this can reduce pilot overheads. In addition, the first terminal may further send the path parameter group search range information to the second device, where the path parameter group search range information is used to correct the $K$ path parameter groups. Therefore, in comparison with an implementation in which the path parameter group search range information is not limited, based on the solution in this application, a calculation amount of correcting the $K$ path parameter groups by the second device can be reduced, and this helps improve path parameter correction efficiency, that is, help improve calculation efficiency.

In a possible implementation, the first information includes the $K$ path parameter groups.

In this implementation, the first device directly sends the $K$ path parameter groups to the second device. This is intuitive, easy to operate, and has high applicability.

In a possible implementation, the first information includes W reference path parameter groups corresponding to W types of path parameter groups and difference information corresponding to each reference path parameter group, and W is a positive integer less than $K$. One type of path parameter group corresponds to one reference path parameter group, and the W types of path parameter groups are obtained by classifying the $K$ path parameter groups.

In this implementation, the $K$ path parameter groups are indicated by using the reference path parameter group and the difference information. This helps reduce feedback overheads of the $K$ path parameter groups.

In a possible implementation, a first-type path parameter group corresponds to a first reference path parameter group, the first-type path parameter group includes at least one path parameter group, the first-type path parameter group is any one of the W types of path parameter groups, and the first reference path parameter group is determined based on the at least one path parameter group.

In this implementation, a reference path parameter group may be determined based on path parameter groups included in a type of path parameter group associated with the reference path parameter group. Therefore, in comparison with directly feeding back the $K$ path parameter groups, the reference path parameter group is sent to determine other K path parameter groups, to reduce feedback overheads of the path parameter group.

In a possible implementation, the first reference path parameter group is one of the at least one path parameter group, or the first reference path parameter group is a path parameter group mean of the at least one path parameter group.

In this implementation, a reference path parameter group may be a mean of a type of path parameter group associated with the reference path parameter group, or a reference path parameter group may be a path parameter group selected from a type of path parameter group, for example, may be a path parameter group that is closest to a centroid (that is, close to a mean) and that is selected from a type of path parameter group. Therefore, in comparison with directly feeding back the $K$ path parameter groups, the reference path parameter group is sent to determine the other $K$ path parameter groups, to reduce the feedback overheads of the path parameter group.

In a possible implementation, a transmission periodicity of the $K$ path parameter groups is T1, and a transmission periodicity of the path parameter group search range information is T2, where T1 is different from T2.

In this application, when the first device directly sends the $K$ path parameter groups to the second device, the $K$ path parameter groups and the path parameter group search range information are updated by using different periodicities, to reduce the feedback overheads.

In a possible implementation, a transmission periodicity of the W reference path parameter groups is T0, a transmission periodicity of the path parameter group search range information is T2, and a transmission periodicity of the difference information is T3, where T0 is greater than T3, and T2 is greater than T3.

In this application, when the $K$ path parameter groups are indicated by using the reference path parameter group and the difference information, the reference path parameter group, the difference information, and the path parameter group search range information are updated by using different periodicities, to reduce the feedback overheads.

In a possible implementation, one path parameter group includes at least one of the following parameters: a delay $\tau$, attenuation $A$, an azimuth of arrival $AOA$, a zenith of arrival $ZOA$, an azimuth of departure $AOD$, and a zenith of departure $ZOD$.

In this application, in a single-input single-output scenario, one path parameter group may include the delay $\tau$ and the attenuation $A$. In a single-input multiple-output scenario, one path parameter group may include the delay $\tau$, the attenuation $A$, the azimuth of arrival $AOA$, and the zenith of arrival $ZOA$. In a multiple-input single-output scenario, one path parameter group may include the delay $\tau$, the attenuation $A$, the azimuth of departure $AOD$, and the zenith of departure $ZOD$. In a multiple-input multiple-output scenario, one path parameter group may include the delay $\tau$, the attenuation $A$, the azimuth of arrival $AOA$, the zenith of arrival $ZOA$, the azimuth of departure $AOD$, and the zenith of departure $ZOD$. For example, the multiple-input multiple-output scenario is used as an example. The first device and the second device each select one reference antenna, and the first device feeds back parameters such as a delay $\tau$, attenuation $A$, an azimuth of arrival $AOA$, a zenith of arrival $ZOA$, an azimuth of departure $AOD$, and a zenith of departure $ZOD$ between two antennas to the second device, so that the second terminal device can deduce a path parameter between other antennas based on the received parameters and with reference to geometric arrangement information of a transceiver array. This helps reduce feedback overheads of a channel.

In a possible implementation, the path parameter group search range information includes at least one of the following information:
delay search range information, attenuation search range information, azimuth of arrival search range information, zenith of arrival search range information, azimuth of departure search range information, and zenith of departure search range information.

In this application, in the single-input single-output scenario, one path parameter group may include the delay search range information and the attenuation search range information. In the single-input multiple-output scenario, one path parameter group may include the delay search range information, the attenuation search range information, the azimuth of arrival search range information, and the zenith of arrival search range information. In the multiple-input single-output scenario, one path parameter group may include the delay search range information, the attenuation search range information, the azimuth of departure search range information, and the zenith of departure search range information. In the multiple-input multiple-output scenario, one path parameter group may include the delay search range information, the attenuation search range information, the azimuth of arrival search range information, the zenith of arrival search range information, the azimuth of departure search range information, and the zenith of departure search range information. It should be noted that, based on the delay search range information, the attenuation search range information, the azimuth of arrival search range information, the zenith of arrival search range information, the azimuth of departure search range information, and the zenith of departure search range information, the delay $\tau$, the attenuation $A$, the azimuth of arrival $AOA$, the zenith of arrival $ZOA$, the azimuth of departure $AOD$, and the zenith of departure $ZOD$ are separately corrected, to reduce a calculation amount of correcting a delay $\tau$, attenuation $A$, an azimuth of arrival $AOA$, a zenith of arrival $ZOA$, an azimuth of departure $AOD$, and/or a zenith of departure $ZOD$ in the $K$ path parameter groups. This helps improve the path parameter correction efficiency, that is, helps improve the calculation efficiency.

According to a second aspect, this application provides a communication method. The method is applied to a second device, and the method includes: receiving first information from a first device, where the first information indicates $K$ path parameter groups, and $K$ is an integer greater than 0; and correcting the $K$ path parameter groups based on path parameter group search range information, and performing channel estimation based on *K* corrected path parameter groups.

In a possible implementation, the path parameter group search range information is configured by the first device; the path parameter group search range information is determined based on the *K* path parameter groups at a plurality of moments; or the path parameter group search range information is pre-specified in a protocol.

In this application, the path parameter group search range information may be configured by the first device for the second device, may be obtained by the second device through calculation based on the *K* path parameter groups, or may be predefined in the protocol. There are various implementations. In addition, a calculation amount of subsequently correcting the *K* path parameter groups by the second device can be reduced. This helps improve path parameter correction efficiency, that is, helps improve calculation efficiency.

In a possible implementation, the first information includes the *K* path parameter groups.

In a possible implementation, the first information includes W reference path parameter groups corresponding to W types of path parameter groups and difference information corresponding to each reference path parameter group, and W is a positive integer less than K. One type of path parameter group corresponds to one reference path parameter group, and the W types of path parameter groups are obtained by classifying the *K* path parameter groups.

In a possible implementation, a first-type path parameter group corresponds to a first reference path parameter group, the first-type path parameter group includes at least one path parameter group, the first-type path parameter group is any one of the W types of path parameter groups, and the first reference path parameter group is determined based on the at least one path parameter group.

In a possible implementation, the first reference path parameter group is one of the at least one path parameter group, or the first reference path parameter group is a path parameter group mean of the at least one path parameter group.

In a possible implementation, a transmission periodicity of the *K* path parameter groups is T1, and a transmission periodicity of the path parameter group search range information is T2, where T1 is different from T2.

In a possible implementation, a transmission periodicity of the W reference path parameter groups is T0, a transmission periodicity of the path parameter group search range information is T2, and a transmission periodicity of the difference information is T3, where T0 is greater than T3, and T2 is greater than T3.

In a possible implementation, one path parameter group includes at least one of the following parameters: a delay $\tau$, attenuation $A$, an azimuth of arrival $AOA$, a zenith of arrival $ZOA$, an azimuth of departure $AOD$, and a zenith of departure $ZOD$.

In a possible implementation, the path parameter group search range information includes at least one of the following information:
delay search range information, attenuation search range information, azimuth of arrival search range information, zenith of arrival search range information, azimuth of departure search range information, and zenith of departure search range information.

According to a third aspect, an embodiment of this application further provides a communication apparatus. The communication apparatus may be used in the first device in the first aspect. The communication apparatus may be the first device, may be an apparatus (for example, a chip, a chip system, or a circuit) in the first device, or may be an apparatus that can be used together with the first device. In a possible implementation, the communication apparatus may include modules or units that are in one-to-one correspondence with the method/operations/steps/actions described in the first aspect. The modules or units may be hardware circuits, may be software, or may be implemented by hardware circuits in combination with software.

In a possible implementation, the apparatus includes: a processing unit, configured to determine path parameter group search range information and first information, where the first information indicates *K* path parameter groups, and *K* is an integer greater than 0; and a transceiver unit, configured to send the path parameter group search range information and the first information to a second device, where the path parameter group search range information is used to correct the *K* path parameter groups, and *K* corrected path parameter groups are used for channel estimation.

In a possible implementation, the first information includes the *K* path parameter groups.

In a possible implementation, the first information includes W reference path parameter groups corresponding to W types of path parameter groups and difference information corresponding to each reference path parameter group, and W is a positive integer less than *K*. One type of path parameter group corresponds to one reference path parameter group, and the W types of path parameter groups are obtained by classifying the *K* path parameter groups.

In a possible implementation, a first-type path parameter group corresponds to a first reference path parameter group, the first-type path parameter group includes at least one path parameter group, the first-type path parameter group is any one of the W types of path parameter groups, and the first reference path parameter group is determined based on the at least one path parameter group.

In a possible implementation, the first reference path parameter group is one of the at least one path parameter group, or the first reference path parameter group is a path parameter group mean of the at least one path parameter group.

In a possible implementation, a transmission periodicity of the *K* path parameter groups is T1, and a transmission periodicity of the path parameter group search range information is T2, where T1 is different from T2.

In a possible implementation, a transmission periodicity of the W reference path parameter groups is T0, a transmission periodicity of the path parameter group search range information is T2, and a transmission periodicity of the difference information is T3, where T0 is greater than T3, and T2 is greater than T3.

In a possible implementation, one path parameter group includes at least one of the following parameters:
a delay $\tau$, attenuation *A*, an azimuth of arrival *AOA*, a zenith of arrival *ZOA*, an azimuth of departure *AOD*, and a zenith of departure *ZOD*.

In a possible implementation, the path parameter group search range information includes at least one of the following information:
delay search range information, attenuation search range information, azimuth of arrival search range information, zenith of arrival search range information, azimuth of departure search range information, and zenith of departure search range information.

According to a fourth aspect, an embodiment of this application further provides a communication apparatus. The communication apparatus may be used in the second device in the second aspect. The communication apparatus may be the second device, may be an apparatus (for example, a chip, a chip system, or a circuit) in the second device, or may be an apparatus that can be used together with the second device. In a possible implementation, the communication apparatus may include modules or units that are in one-to-one correspondence with the method/operations/steps/actions described in the first aspect. The modules or units may be hardware circuits, may be software, or may be implemented by hardware circuits in combination with software.

In a possible implementation, the apparatus includes:

a transceiver unit, configured to receive first information from a first device, where the first information indicates *K* path parameter groups, and *K* is an integer greater than 0; and
a processing unit, configured to: correct the K path parameter groups based on path parameter group search range information, and perform channel estimation based on K corrected path parameter groups.

In a possible implementation, the path parameter group search range information is configured by the first device;

the path parameter group search range information is determined based on the K path parameter groups at a plurality of moments; or
the path parameter group search range information is pre-specified in a protocol.

In a possible implementation, the first information includes the K path parameter groups.

In a possible implementation, the first information includes W reference path parameter groups corresponding to W types of path parameter groups and difference information corresponding to each reference path parameter group, and W is a positive integer less than *K*. One type of path parameter group corresponds to one reference path parameter group, and the W types of path parameter groups are obtained by classifying the *K* path parameter groups.

In a possible implementation, a first-type path parameter group corresponds to a first reference path parameter group, the first-type path parameter group includes at least one path parameter group, the first-type path parameter group is any one of the W types of path parameter groups, and the first reference path parameter group is determined based on the at least one path parameter group.

In a possible implementation, the first reference path parameter group is one of the at least one path parameter group, or the first reference path parameter group is a path parameter group mean of the at least one path parameter group.

In a possible implementation, a transmission periodicity of the *K* path parameter groups is T1, and a transmission periodicity of the path parameter group search range information is T2, where T1 is different from T2.

In a possible implementation, a transmission periodicity of the W reference path parameter groups is T0, a transmission periodicity of the path parameter group search range information is T2, and a transmission periodicity of the difference information is T3, where T0 is greater than T3, and T2 is greater than T3.

In a possible implementation, one path parameter group includes at least one of the following parameters:
a delay $\tau$, attenuation *A*, an azimuth of arrival *AOA*, a zenith of arrival *ZOA*, an azimuth of departure *AOD*, and a zenith of departure *ZOD*.

In a possible implementation, the path parameter group search range information includes at least one of the following information:
delay search range information, attenuation search range information, azimuth of arrival search range information, zenith of arrival search range information, azimuth of departure search range information, and zenith of departure search range information.

According to a fifth aspect, this application provides a communication apparatus. The communication apparatus includes a processor, and the processor is configured to implement the method according to any one of the first aspect by using a logic circuit or by executing instructions.

In a possible implementation, the apparatus further includes a transceiver, configured to send and receive a signal.

In a possible implementation, the processor is coupled to a memory, and the memory stores the foregoing instructions.

In a possible implementation, the apparatus further includes a memory, configured to store the foregoing instructions. Optionally, the memory and the processor are integrated together. Alternatively, the memory and the processor are disposed separately.

According to a sixth aspect, this application provides a communication apparatus. The communication apparatus includes a processor, and the processor is configured to implement the method according to any one of the second aspect by using a logic circuit or by executing instructions.

In a possible implementation, the apparatus further includes a transceiver, configured to send and receive a signal.

In a possible implementation, the processor is coupled to a memory, and the memory stores the foregoing instructions.

In a possible implementation, the apparatus further includes a memory, configured to store the foregoing instructions. Optionally, the memory and the processor are integrated together. Alternatively, the memory and the processor are disposed separately.

According to a seventh aspect, this application provides a computer-readable storage medium. The storage medium stores a computer program or instructions, and when the computer program or the instructions are executed by a computer, the method according to any one of the first aspect and the second aspect is implemented.

According to an eighth aspect, this application provides a computer program product including instructions. The computer program product includes a computer program or instructions, and when the computer program or the instructions are run on a computer, the method according to any one of the first aspect and the second aspect is implemented.

According to a ninth aspect, a communication system is provided. The communication system includes the first device according to the third aspect and the second device according to the fourth aspect.

## BRIEF DESCRIPTION OF DRAWINGS

FIG. 1 is a diagram of a structure of a communication system according to an embodiment of this application;
FIG. 2 is a diagram of an application scenario according to an embodiment of this application;
FIG. 3 is an interaction diagram of a communication method according to an embodiment of this application;
FIG. 4 is a diagram of a zenith of departure and an azimuth of departure according to an embodiment of this application;
FIG. 5 is a diagram of a zenith of arrival and an azimuth of arrival according to an embodiment of this application;
FIG. 6 is a diagram of a communication path in a downlink transmission scenario in a multi-antenna scenario according to an embodiment of this application;
FIG. 7 is a diagram of a structure of a communication apparatus according to an embodiment of this application;
FIG. 8 is a diagram of a structure of another communication apparatus according to an embodiment of this application;
FIG. 9 is a diagram of a structure of another communication apparatus according to an embodiment of this application; and
FIG. 10 is a diagram of a structure of another communication apparatus according to an embodiment of this application.

## DESCRIPTION OF EMBODIMENTS

The following clearly and completely describes the technical solutions in embodiments of this application with reference to the accompanying drawings in embodiments of this application.

In descriptions of this application, unless otherwise specified, "/" means "or". For example, A/B may represent A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, words such as "example" or "for example" are used to give an example, an illustration, or descriptions. Any embodiment or design scheme described as "example" or "for example" in this application should not be explained as being more preferred or having more advantages than another embodiment or design scheme. Exactly, use of the words such as "example" or "for example" is intended to present a related concept in a specific manner.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as a new radio (new radio, NR) system, a system evolved after 5G such as a 6th generation (6th generation, 6G) system, and a wireless local area network (Wireless Local Area Network, WLAN). This is not limited herein.

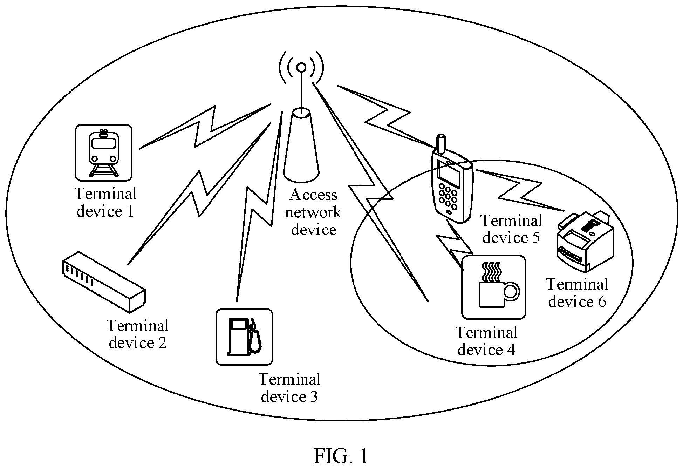

For example, FIG. 1 is a diagram of a structure a communication system according to an embodiment of this application. As shown in FIG. 1, an access network device and a terminal device 1 to a terminal device 6 form a communication system. In the communication system, the terminal device 1 to the terminal device 6 may send uplink information to the access network device, and the access network device may also send downlink information to the terminal device 1 to the terminal device 6. In addition, the terminal device 4 to the terminal device 6 may also form a communication system. In the communication system, the access network device may send the downlink information to the terminal device 1, the terminal device 2, the terminal device 5, and the like. The terminal device 5 may also send the downlink information to the terminal device 4 and the terminal device 6. The terminal device 4 and the terminal device 6 may also send the uplink information to the access network device by using the terminal device 5.

The terminal device in embodiments of this application may be a device having a wireless transceiver function, and may be specifically user equipment (user equipment, UE), an access terminal, a subscriber unit (subscriber unit), a subscriber station, a mobile station (mobile station), a customer-premises equipment (customer-premises equipment, CPE), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to the wireless modem, a vehicle-mounted device, a communication device carried on high-altitude aircraft, a wearable device, an unmanned aerial vehicle, a robot, a smart point of sale (point of sale, POS) machine, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus, for example, a chip system, that can support the terminal device in implementing the function. The apparatus may be mounted in the terminal device or used together with the terminal device. In embodiments of this application, the chip system may include a chip, or may include a chip and another discrete component.

The access network device in embodiments of this application may be a device having a wireless transceiver function, and is configured to communicate with the terminal device, or may be a device that connects the terminal device to a wireless network. The network device may be a node in a radio access network, and may also be referred to as a base station, or may be referred to as a radio access network (radio access network, RAN) node (or device). The network device may be an evolved NodeB (evolved NodeB, eNB or eNodeB) in LTE, a next generation NodeB (next generation NodeB, gNB) in a 5G network or a base station in a future evolved public land mobile network (public land mobile network, PLMN), a broadband network gateway (broadband network gateway, BNG), an aggregation switch or a non-3rd generation partnership project (3rd generation partnership project, 3GPP) access device, or the like. Optionally, the network device in embodiments of this application may include base stations in various forms, for example, a macro base station, a micro base station (also referred to as a small cell), a relay station, an access point, a device for implementing a base station function in a communication system evolved after 5G, an access point (access point, AP) in a Wi-Fi system, a transmission reception point (transmission reception point, TRP), a transmitting point (transmitting point, TP), a mobile switching center, and a device that undertakes a base station function in device-to-device (Device-to-Device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud radio access network (cloud radio access network, C-RAN) system, and a network device in a non-terrestrial network (non-terrestrial network, NTN) communication system, that is, may be deployed on a high-altitude platform or a satellite. This is not specifically limited in embodiments of this application.

The access network device may communicate and interact with a core network device, to provide a communication service for the terminal device. The core network device is, for example, a device in a 5G network core network (core network, CN). As a bearer network, the core network provides an interface to a data network, provides communication connection, authentication, management, and policy control for a terminal, and bearers a data service.

In embodiments of this application, an apparatus configured to implement a function of the network device may be a network device, or may be an apparatus, for example, a chip system, that can support the network device in implementing the function. The apparatus may be mounted in the network device or used together with the network device.

It should be noted that the first device in embodiments of this application may be an access network device, and the second device may be a terminal device. Alternatively, the first device in this application may be a terminal device, and the second device may be an access network device. In other words, this application is applicable to a downlink scenario or an uplink scenario. For ease of understanding, the following embodiments of this application are mainly described by using the downlink scenario as an example. That is, the first device is an access network device, and the second device is a terminal device.

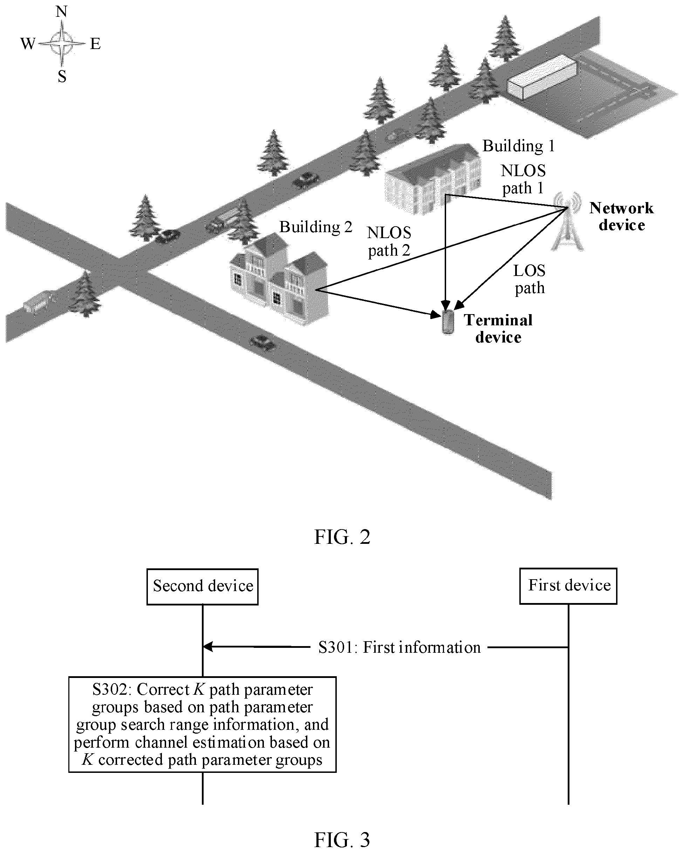

For example, FIG. 2 is a diagram of an application scenario according to an embodiment of this application. In a downlink scenario shown in FIG. 2, a first device is a network device, and a second device is a terminal device. The network device transmits a signal, the transmitted signal may arrive at the terminal device through a line of sight (line of sight, LOS) path (path) (a LOS path shown in FIG. 2) and a non-line of sight (Non-Line Of Sight, NLOS) path (an NLOS path 1 and an NLOS path 2 shown in FIG. 2), and the terminal device demodulates a received signal.

It should be noted that, after being transmitted by a transmit end, data arrives at a receive end through propagation of a radio channel. Various interference factors in the radio channel affect the transmitted data. Therefore, data received by the receive end may be greatly different from the data transmitted by the transmit end. Therefore, to mitigate impact of a propagation environment on data sending, channel estimation usually needs to be performed by using a pilot signal, and the data received by the receive end is further demodulated based on the channel estimation. Specifically, it is proposed in a conventional technology that a pilot signal known to the receive end may be transmitted while the data is transmitted. The receive end performs channel estimation based on a received pilot signal and the known pilot signal, and further demodulates the received data based on the channel estimation. In other words, in an existing communication system (for example, an LTE system or an NR system), a pilot (for example, a demodulation reference signal (demodulation reference signal, DMRS)) used for demodulating data is sent together with the data. The pilot is used to estimate a channel, and then demodulate the data based on information about the estimated channel. In other words, in the conventional technology, a channel response is obtained completely by using the pilot. However, this pilot signal sending manner increases pilot overheads.

With development of a wireless sensing technology, embodiments of this application further provide a solution in which the wireless sensing technology may be combined with channel estimation to assist in the channel estimation, so that pilot overheads can be reduced. Specifically, four-dimension (four-dimension, 4D) information (where the 4D information includes three-dimension (three-dimension, 3D) environment information and electromagnetic information of a 3D environment) of a surrounding propagation environment and location information of a transmit end (TX) and a receive end (RX) may be obtained by using the wireless sensing technology. Further, a path parameter group is determined based on the 4D information and the location information of the TX and the RX, and channel estimation is performed based on the path parameter group, to reduce the communication pilot overheads. However, because a quantity of communication network nodes, an antenna array size, and a signal bandwidth are always limited, errors inevitably exist in the 4D information of the surrounding environment and locations of the TX and the RX that are obtained in a sensing-based manner, and an error inevitably exists in the path parameter group obtained through calculation based on the 4D information with the error and the location information that is of the TX and the RX and with the error. Therefore, a small quantity of pilots still need to be inserted into sent data to correct a path parameter. However, solution space corresponding to a process of correcting the path parameter group by using the small quantity of pilots is excessively large, and calculation complexity is high. Consequently, channel estimation efficiency is greatly reduced. In other words, in embodiments of this application, the 4D environment information and location information of a transceiver may be obtained. In this case, a path parameter corresponding to a channel may be calculated based on the 4D environment information and a location of the transceiver. Because errors inevitably exist in the location of the transceiver and an environment parameter, the calculated path parameter is inaccurate. In this case, the path parameter needs to be corrected by using a small quantity of pilots, and channel reconstruction is further performed based on a corrected path parameter. In other words, in this application, "the small quantity of pilots+the path parameter→the corrected path parameter →a channel response" is used. In comparison with the manner in which the channel response is obtained completely by using the pilot in the conventional technology, pilot overheads used in this application are reduced.

Based on this, this application provides a communication method and a communication apparatus, to reduce the pilot overheads.

The following describes in detail the communication method and the communication apparatus provided in this application.

FIG. 3 is an interaction diagram of a communication method according to an embodiment of this application. As shown in FIG. 3, the communication method includes the following steps S301 and S302.

S301: A first device sends first information to a second device, and correspondingly the second device receives the first information from the first device. The first information indicates $K$ path parameter groups, and $K$ is an integer greater than 0. It may be understood that the $K$ path parameter groups in this embodiment of this application may be understood as path parameter groups corresponding to K communication paths, and one communication path corresponds to one path parameter group.

In some feasible implementations, the first device determines the first information, and sends the first information to the second device. Correspondingly, the second device receives the first information from the first device.

It should be noted that, in an implementation, that the first device determines the first information may be understood as that the first device receives the first information from a third device. The third device may be another device with a strong calculating capability. Optionally, that the first device determines the first information may alternatively be understood as that the first device obtains location information of the first device, location information of the second device, and 4D environment information, and determines the K path parameter groups based on the location information of the first device, the location information of the second device, and the 4D environment information. The 4D environment information includes 3D environment information and electromagnetic information of the 3D environment information. A calculation algorithm may be a full-wave electromagnetic calculation method, a ray tracing method, or the like. This is specifically determined based on an actual application scenario, and is not limited herein.

It should be noted that, in a single-input single-output scenario, one path parameter group may include one or more parameters of a delay $\tau$, attenuation $A$, and the like. In a single-input multiple-output scenario, one path parameter group may include one or more parameters of a delay $\tau$, attenuation $A$, an azimuth of arrival (azimuth of arrival, $AOA$), a zenith of arrival (zenith of arrival, $ZOA$), and the like. In a multiple-input single-output scenario, one path parameter group may include one or more parameters of a delay $\tau$, attenuation A, an azimuth of departure (azimuth of departure, $AOD$), a zenith of departure (zenith of departure, $ZOD$), and the like. In a multiple-input multiple-output scenario, one path parameter group may include one or more parameters of a delay $\tau$, attenuation $A$, an azimuth of arrival $AOA$, a zenith of arrival $ZOA$, an azimuth of departure $AOD$, a zenith of departure $ZOD$, and the like.

Herein, one TX and one RX are used as an example to describe the delay $\tau$. A signal transmitted by the TX arrives at the RX after passing through an environment. The transmitted signal may arrive at the RX through a plurality of paths, including a LOS path and an NLOS path. The NLOS path may further include a plurality of paths, for example, an NLOS path 1 on which the signal transmitted by the TX is sent to a building and then reflected to the RX, and an NLOS path 2 on which the signal transmitted by the TX is sent to a vehicle and then reflected to the RX. For the LOS path, the delay herein is a delay (a path length divided by an electromagnetic wave propagation speed) corresponding to a signal propagation path from the TX to the RX. For the NLOS path, the delay herein is a length that is of a path from the TX to a reflector and then from the reflector to the RX and that is divided by the electromagnetic wave propagation speed, in other words, a length that is of a path through which the signal transmitted by the TX arrives at the RX after passing through the environment and that is divided by the electromagnetic wave propagation speed.

The attenuation A is a ratio of strength of the transmitted signal to strength of a received signal. For example, assuming that the strength of the transmitted signal is a and the strength of the received signal is b, $A = \dfrac{b}{a}$.

The azimuth of arrival $AOA$ is an included angle of a second projection vector in an X-axis direction, and a second reflection point is a reflection point closest to a signal receiving device. If there are a plurality of reflection points between a signal sending device and the signal receiving device, a first reflection point is different from the second reflection point; or if there is one reflection point between a signal sending device and the signal receiving device, a first reflection point is the same as the second reflection point.

The zenith of arrival $ZOA$ is an included angle of a vector formed by a connection line between the signal receiving device and the second reflection point in a Z-axis direction, and a projection vector of the vector formed by the connection line between the signal receiving device and the second reflection point on an X-Y plane is the second projection vector.

The azimuth of departure $AOD$ is an included angle of a first projection vector in the X-axis direction, and the first reflection point is a reflection point closest to the signal sending device.

The zenith of departure $ZOD$ is an included angle of a vector formed by a connection line between the signal sending device and the first reflection point in the Z-axis direction, and a projection vector of the vector formed by the connection line between the signal sending device and the first reflection point on the X-Y plane is the first projection vector.

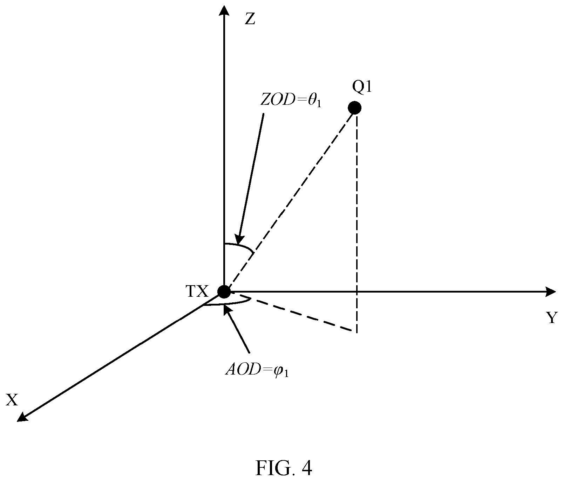

For example, FIG. 4 is a diagram of the $ZOD$ and the $AOD$ according to an embodiment of this application. As shown in FIG. 4, the TX is the signal sending device, and is also referred to as a transmit end, and Q1 is the first reflection point. For example, in the scenario shown in FIG. 3, the TX is the network device in FIG. 3. If a communication path is the NLOS path 1, the first reflection point is a building 1 in FIG. 3; or if a communication path is the NLOS path 2, the first reflection point is a building 2 in FIG. 3. As shown in FIG. 4, the $ZOD = \theta_1$, and the $AOD = \varphi_1$.

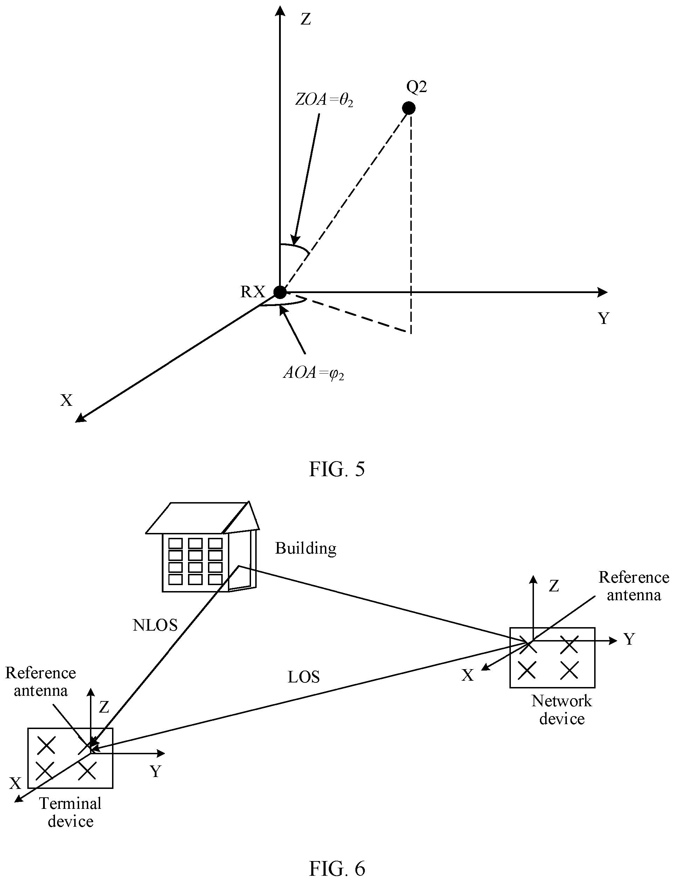

For another example, FIG. 5 is a diagram of the $ZOA$ and the $AOA$ according to an embodiment of this application. As shown in FIG. 5, the RX is the signal receiving device, and is also referred to as a receive end, and Q2 is the second reflection point. For example, in the scenario shown in FIG. 3, the RX is the terminal device in FIG. 3. If a communication path is the NLOS path 1, the first reflection point is a building 1 in FIG. 3; or if a communication path is the NLOS path 2, the first reflection point is a building 2 in FIG. 3. As shown in FIG. 5, the $ZOA = \theta_2$, and the $AOA = \varphi_2$.

It should be noted that, in this embodiment of this application, the attenuation A included in one path parameter group may alternatively be replaced with a gain G, where the attenuation is a reciprocal of the gain, that is, A=1/G. For ease of understanding, the following embodiments of this application are mainly described by using an example in which one path parameter group includes the delay $\tau$, the attenuation $A$, the azimuth of arrival $AOA$, the zenith of arrival $ZOA$, the azimuth of departure $AOD$, and the zenith of departure $ZOD$. That is, a multiple-input multiple-output system is used as an example for description.

In some possible implementations, the first information mainly indicates the K path parameter groups in the following two manners.

    1. The first information includes the K path parameter groups. In other words, the first information directly includes a value of each parameter in each of the K path parameter groups.

For example, it is assumed that N=3. In other words, there are three path parameter groups. The three path parameter groups are respectively a path parameter group 1, a path parameter group 2, and a path parameter group 3. Specifically, the path parameter group 1=[$\tau_1, A_1, AOA_1, ZOA_1, AOD_1, ZOD_1$], the path parameter group 2=[$\tau_2, A_2, AOA_2, ZOA_2, AOD_2, ZOD_2$], and the path parameter group 3=[$\tau_3, A_3, AOA_3, ZOA_3, AOD_3, ZOD_3$]. Therefore, the first information may include [$\tau_1, A_1, AOA_1, ZOA_1, AOD_1, ZOD_1$], [$\tau_2, A_2, AOA_2, ZOA_2, AOD_2, ZOD_2$], and [$\tau_3, A_3, AOA_3, ZOA_3, AOD_3, ZOD_3$].

It should be noted that, when the first information includes the K path parameter groups, a transmission periodicity of the K path parameter groups may be T1. A value of the transmission periodicity T1 is determined by a movement speed of the terminal device. Specifically, a higher movement speed of the terminal device indicates a shorter periodicity T1, and a lower movement speed of the terminal device indicates a longer periodicity T1.

2. The first information includes W reference path parameter groups corresponding to W types of path parameter groups and difference information corresponding to each reference path parameter group, and W is a positive integer less than K. One type of path parameter group corresponds to one reference path parameter group, and the W types of path parameter groups are obtained by classifying the K path parameter groups. In other words, the first device may classify the K path parameter groups to obtain the W types of path parameter groups. Then, the first device determines the W reference path parameter groups corresponding to the W types of path parameter groups. One type of path parameter group corresponds to one reference path parameter group. Further, the first device determines difference information between a path parameter group in each type of path parameter group and a reference path parameter group corresponding to each type of path parameter group, and sends the W reference path parameter groups and the difference information corresponding to each reference path parameter group as the first information to the second device. There may be a plurality of classification methods, for example, a K-mean algorithm (K-mean algorithm) and a density-based spatial clustering of applications with noise (density-based spatial clustering of applications with noise, DBSCAN) algorithm. This is not limited herein. A principle of the K-mean algorithm is to divide $K$ points into $K$ clusters, so that each point belongs to a cluster corresponding to a mean (namely, a cluster center) closest to the point. The DBSCAN algorithm is a density-based clustering algorithm based on a high-density connected region, and can divide regions with sufficient density into clusters and find a cluster of any shape in data with noise.

In a possible implementation, a first-type path parameter group corresponds to a first reference path parameter group, the first-type path parameter group includes at least one path parameter group, the first-type path parameter group is any one of the W types of path parameter groups, and the first reference path parameter group may be determined based on the at least one path parameter group. For example, the first reference path parameter group may be one of the at least one path parameter group, or the first reference path parameter group may be a path parameter group mean of the at least one path parameter group. In other words, a reference path parameter group corresponding to a type of path parameter group in this embodiment of this application may be a path parameter group determined from at least one path parameter group included in the type of path parameter group, or a reference path parameter group corresponding to a type of path parameter group may be a path parameter group mean of at least one path parameter group included in the type of path parameter group.

For example, it is assumed that N=7. In other words, there are seven path parameter groups. The seven path parameter groups are respectively a path parameter group 1, a path parameter group 2, a path parameter group 3, a path parameter group 4, a path parameter group 5, a path parameter group 6, and a path parameter group 7. Specifically, the path parameter group 1=[$\tau_1$, $A_1$, $AOA_1$, $ZOA_1$, $AOD_1$, $ZOD_1$ ], the path parameter group 2=[ $\tau_2$, $A_2$, $AOA_2$, $ZOA_2$, $AOD_2$, $ZOD_2$ ], the path parameter group 3=[ $\tau_3$, $A_3$, $AOA_3$, $ZOA_3$, $AOD_3$, $ZOD_3$ ], the path parameter group 4=[ $\tau_4$, $A_4$, $AOA_4$, $ZOA_4$, $AOD_4$, $ZOD_4$ ], the path parameter group 5=[ $\tau_5$, $A_5$, $AOA_5$, $ZOA_5$, $AOD_5$, $ZOD_5$ ], the path parameter group 6=[ $\tau_6$, $A_6$, $AOA_6$, $ZOA_6$, $AOD_6$, $ZOD_6$ ], and the path parameter group 7=[$\tau_7$, $A_7$, $AOA_7$, $ZOA_7$, $AOD_7$, $ZOD_7$]. Two types of path parameter groups may be obtained by classifying the seven path parameter groups. A first-type path parameter group includes the path parameter group 1, the path parameter group 2, the path parameter group 3, and the path parameter group 4, and a second-type path parameter group includes the path parameter group 5, the path parameter group 6, and the path parameter group 7.

It is assumed that a reference path parameter group 1 corresponding to the first-type path parameter group is the path parameter group 1, and a reference path parameter group corresponding to the second-type path parameter group is the path parameter group 5. In this case, differential calculation is separately performed on the path parameter group 2, the path parameter group 3, and the path parameter group 4 with the path parameter group 1, to obtain difference information 2-1, difference information 3-1, and difference information 4-1. The difference information 2-1=the path parameter group 2-the path parameter group 1, the difference information 3-1=the path parameter group 3-the path parameter group 1, and the difference information 4-1=the path parameter group 4-the path parameter group 1. Differential calculation is separately performed on the path parameter group 6 and the path parameter group 7 with the path parameter group 5, to obtain difference information 6-5 and difference information 7-5. The difference information 6-5=the path parameter group 6-the path parameter group 5, and the difference information 7-5=the path parameter group 7-the path parameter group 5.

Specifically, the difference information 2-1=[ $\tau_2 - \tau_1$, $A_2 - A_1$, $AOA_2 - AOA_1$, $ZOA_2 - ZOA_1$, $AOD_2 - AOD_1$, $ZOD_2 - ZOD_1$ ], the difference information 3-1=[ $\tau_3 - \tau_1$, $A_3 - A_1$, $AOA_3 - AOA_1$, $ZOA_3 - ZOA_1$, $AOD_3 - AOD_1$, $ZOD_3 - ZOD_1$ ], and the difference information 4-1=[ $\tau_4 - \tau_1$, $A_4 - A_1$, $ADA_4 - ADA_1$, $ZOA_4 - ZOA_1$, $AOD_4 - AOD_1$, $ZOD_4 - ZOD_1$ ]. The difference information 6-5=[ $\tau_6 - \tau_5$, $A_6 - A_5$, $AOA_6 - AOA_5$, $ZOA_6 - ZOA_5$, $AOD_6 - AOD_5$, $ZOD_6 - ZOD_5$ ], and the difference information 7-5=[$\tau_7 - \tau_5$, $A_7 - A_5$, $AOA_7 - AOA_5$, $ZOA_7 - ZOA_5$, $AOD_7 - AOD_5$, $ZOD_7 - ZOD_5$].

Therefore, the first information may include the reference path parameter group 1 (namely, the path parameter group 1), difference information (to be specific, the difference information 2-1, the difference information 3-1, and the difference information 4-1) corresponding to the reference path parameter group 1, the reference path parameter group 2 (namely, the path parameter group 5), and difference information (to be specific, the difference information 6-5 and the difference information 7-5) corresponding to the reference path parameter group 2. To be specific, the first information includes [ $\tau_1$, $A_1$, $AOA_1$, $ZOA_1$, $AOD_1$, $ZOD_1$ ], [ $\tau_2 - \tau_1$, $A_2 - A_1$, $AOA_2 - AOA_1$, $ZOA_2 - ZOA_1$, $AOD_2 - AOD_1$, $ZOD_2 - ZOD_1$ ], [ $\tau_3 - \tau_1$, $A_3 - A_1$, $AOA_3 - AOA_1$, $ZOA_3 - ZOA_1$, $AOD_3 - AOD_1$, $ZOD_3 - ZOD_1$ ], [ $\tau_4 - \tau_1$, $A_4 - A_1$, $AOA_4 - AOA_1$, $ZOA_4 - ZOA_1$, $AOD_4 - AOD_1$, $ZOD_4 - ZOD_1$ ], [ $\tau_5$, $A_5$, $AOA_5$, $ZOA_5$, $AOD_5$, $ZOD_5$ ], [ $\tau_6 - \tau_5$, $A_6 - A_5$, $AOA_6 - AOA_5$, $ZOA_6 - ZOA_5$, $AOD_6 - AOD_5$, $ZOD_6 - ZOD_5$ ], and [$\tau_7 - \tau_5$, $A_7 - A_5$, $AOA_7 - AOA_5$, $ZOA_7 - ZOA_5$, $AOD_7 - AOD_5$, $ZOD_7 - ZOD_5$].

For another example, it is assumed that a reference path parameter group 1 corresponding to the first-type path parameter group is a reference path parameter group mean 1 of the path parameter group 1 to the path parameter group 4, and a reference path parameter group corresponding to the second-type path parameter group is a path parameter group mean 2 of the path parameter group 5 to the path parameter group 7. In this case, differential calculation is separately performed on the path parameter group 1, the path parameter group 2, the path parameter group 3, and the path parameter group 4 with the reference path parameter group mean 1, to obtain difference information 1, difference information 2, difference information 3, and difference information 4. The difference information 1=the path parameter group 1-the reference path parameter group mean 1, the difference information 2=the path parameter group 2-the reference path parameter group 1, the difference information 3=the path parameter group 3-the reference path parameter group 1, and the difference information 4=the path parameter group 4-the reference path parameter group 1. Differential calculation is separately performed on the path parameter group 5, the path parameter group 6, and the path parameter group 7 with the path parameter group mean 2, to obtain difference information 5, difference information 6, and difference information 7. The difference information 5=the path parameter group 5-the path parameter group mean 2, the difference information 6=the path parameter group 6-the path parameter group 5, and the difference information 7=the path parameter group 7-the path parameter group 5.

The reference path parameter group mean 1=(the path parameter group 1+the path parameter group 2+the path parameter group 3+the path parameter group 4)/4, and the reference path parameter group mean 2=(the path parameter group 5+the path parameter group 6)/2. The reference path parameter group mean

$$1=\left[\frac{(\tau_1+\tau_2+\tau_3+\tau_4)}{4}, \ \frac{A_1+A_2+A_3+A_4}{4}, \ \frac{AOA_1+AOA_2+AOA_3+AOA_4}{4}, \right.$$

$$\left. \frac{(ZOA_1+ZOA_2+ZOA_3+ZOA_4)}{4}, \ \frac{(AOD_1+AOD_2+AOD_3+AOD_4)}{4}, \ \frac{(ZOD_1+ZOD_2+ZOD_3+ZOD_4)}{4}\right]$$

, and the reference path parameter group mean

$$2=\left[\frac{(\tau_5+\tau_6+\tau_7)}{3}, \ \frac{(A_5+A_6+A_7)}{3}, \ \frac{(AOA_5+AOA_6+AOA_7)}{3}, \ \frac{(ZOA_5+ZOA_6+ZOA_7)}{3}, \right.$$

$$\frac{(AOD_5+AOD_6+AOD_7)}{3}, \frac{(ZOD_5+ZOD_6+ZOD_7)}{3}]$$

.

Specifically, the difference information

$$1=[\quad \tau_1-\frac{(\tau_1+\tau_2+\tau_3+\tau_4)}{4}, A_1-\frac{A_1+A_2+A_3+A_4}{4}, AOA_1-\frac{AOA_1+AOA_2+AOA_3+AOA_4}{4},$$

$$ZOA_1-\frac{(ZOA_1+ZOA_2+ZOA_3+ZOA_4)}{4}, AOD_1-\frac{(AOD_1+AOD_2+AOD_3+AOD_4)}{4}, ZOD_1-\frac{(ZOD_1+ZOD_2+ZOD_3+ZOD_4)}{4}]$$

The difference information

$$2=[\quad \tau_2-\frac{(\tau_1+\tau_2+\tau_3+\tau_4)}{4}, A_2-\frac{A_1+A_2+A_3+A_4}{4}, AOA_2-\frac{AOA_1+AOA_2+AOA_3+AOA_4}{4},$$

$$ZOA_2-\frac{(ZOA_1+ZOA_2+ZOA_3+ZOA_4)}{4}, AOD_2-\frac{(AOD_1+AOD_2+AOD_3+AOD_4)}{4}, ZOD_2-\frac{(ZOD_1+ZOD_2+ZOD_3+ZOD_4)}{4}]$$

.

The difference information

$$3=[\quad \tau_3-\frac{(\tau_1+\tau_2+\tau_3+\tau_4)}{4}, A_3-\frac{A_1+A_2+A_3+A_4}{4}, AOA_3-\frac{AOA_1+AOA_2+AOA_3+AOA_4}{4},$$

$$ZOA_3-\frac{(ZOA_1+ZOA_2+ZOA_3+ZOA_4)}{4}, AOD_3-\frac{(AOD_1+AOD_2+AOD_3+AOD_4)}{4}, ZOD_3-\frac{(ZOD_1+ZOD_2+ZOD_3+ZOD_4)}{4}]$$

.

The difference information

$$4=[\quad \tau_4-\frac{(\tau_1+\tau_2+\tau_3+\tau_4)}{4}, A_4-\frac{A_1+A_2+A_3+A_4}{4}, AOA_4-\frac{AOA_1+AOA_2+AOA_3+AOA_4}{4},$$

$$ZOA_4-\frac{(ZOA_1+ZOA_2+ZOA_3+ZOA_4)}{4}, AOD_4-\frac{(AOD_1+AOD_2+AOD_3+AOD_4)}{4}, ZOD_4-\frac{(ZOD_1+ZOD_2+ZOD_3+ZOD_4)}{4}]$$

The difference information

$$5=[\quad \tau_5-\frac{(\tau_5+\tau_6+\tau_7)}{3}, A_5-\frac{(A_5+A_6+A_7)}{3}, AOA_5-\frac{(AOA_5+AOA_6+AOA_7)}{3}, ZOA_5-\frac{(ZOA_5+ZOA_6+ZOA_7)}{3},$$

$$AOD_5-\frac{(AOD_5+AOD_6+AOD_7)}{3}, ZOD_5-\frac{(ZOD_5+ZOD_6+ZOD_7)}{3}]$$

The difference information

$$6=[\quad \tau_6-\frac{(\tau_5+\tau_6+\tau_7)}{3}, A_6-\frac{(A_5+A_6+A_7)}{3}, AOA_6-\frac{(AOA_5+AOA_6+AOA_7)}{3}, ZOA_6-\frac{(ZOA_5+ZOA_6+ZOA_7)}{3},$$

$$AOD_6-\frac{(AOD_5+AOD_6+AOD_7)}{3}, ZOD_6-\frac{(ZOD_5+ZOD_6+ZOD_7)}{3}]$$

The difference information

$$7=[\quad \tau_7-\frac{(\tau_5+\tau_6+\tau_7)}{3}, A_7-\frac{(A_5+A_6+A_7)}{3}, AOA_7-\frac{(AOA_5+AOA_6+AOA_7)}{3}, ZOA_7-\frac{(ZOA_5+ZOA_6+ZOA_7)}{3},$$

$$AOD_7-\frac{(AOD_5+AOD_6+AOD_7)}{3}, ZOD_7-\frac{(ZOD_5+ZOD_6+ZOD_7)}{3}]$$

.

It should be noted that, when the first information includes the W reference path parameter groups corresponding to the W types of path parameter groups and the difference information corresponding to each reference path parameter group, a transmission periodicity of the W reference path parameter groups may be T0, and a transmission periodicity of the difference information may be T3. Values of the transmission periodicity T0 and the transmission periodicity T3 are determined by a movement speed of the terminal device. Specifically, a higher movement speed of the terminal device indicates a shorter periodicity T0 and a shorter periodicity T3, and a lower movement speed of the terminal device indicates a longer periodicity T0 and a longer periodicity T3. Generally, T0 may be greater than T3.

S302: Correct the K path parameter groups based on path parameter group search range information, and perform channel estimation based on K corrected path parameter groups.

In some feasible implementations, the second device may correct the K path parameter groups based on the path parameter group search range information, and perform channel estimation based on the K corrected path parameter groups.

It should be noted that the path parameter group search range information may include at least one of the following information: delay search range information, attenuation search range information, azimuth of arrival search range information, zenith of arrival search range information, azimuth of departure search range information, and zenith of departure search range information.

Path parameter search range information of any path parameter $\alpha$ may be a specific value. For example, the value may be represented as $\Delta\alpha$. Therefore, a search range of the path parameter $\alpha$ may be represented as $[\alpha - \Delta\alpha, \alpha + \Delta\alpha]$. To be specific, the delay search range information may be $\Delta\tau$, the attenuation search range information may be $\Delta A$, the azimuth of arrival search range information may be $\Delta AOA$, the zenith of arrival search range information may be $\Delta ZOA$, the azimuth of departure search range information may be $\Delta AOD$, and the zenith of departure search range information may be $\Delta ZOD$. Therefore, a search range of a delay is $[\tau-\Delta\tau, \tau+\Delta\tau]$, a search range of attenuation is $[A-\Delta A, A+\Delta A]$, a search range of an azimuth of arrival is $[AOA-\Delta AOA, AOA+\Delta AOA]$, a search range of a zenith of arrival is $[ZOA-\Delta ZOA, ZOA+\Delta ZOA]$, a search range of an azimuth of departure is $[AOD-\Delta AOD, AOD+\Delta AOD]$, and a search range of a zenith of departure is $[ZOD-\Delta ZOD, ZOD+\Delta ZOD]$.

Optionally, it is assumed that distribution of path parameter measurement values at different moments complies with normal distribution. In this case, the path parameter group search range information corresponding to any path parameter may alternatively be a standard deviation of the path parameter measurement values. For example, the standard deviation of the path parameter measurement values may be represented as $\Delta\beta$. Therefore, any path parameter may be searched in a range of $[\beta-\Delta\beta, \beta+\Delta\beta]$ with a probability of 68.2%, searched in a range of $[\beta-2\Delta\beta, \beta+2\Delta\beta]$ with a probability of 95.4%, and searched in a range of $[\beta-3\Delta\beta, \beta+3\Delta\beta]$ with a probability of 99.8%. The delay is used as an example. The delay may be searched in a range of $[\tau-\Delta\tau, \tau+\Delta\tau]$ with a probability of 68.2%, searched in a range of $[\tau-2\Delta\tau, \tau+2\Delta\tau]$ with a probability of 95.4%, and searched in a range of $[\tau-3\Delta\tau, \tau+3\Delta\tau]$ with a probability of 99.8%.

It should be noted that the path parameter group search range information in this embodiment of this application may be configured by the first device. In other words, the first device may send the path parameter group search range information to the second device. Correspondingly, the second device receives the path parameter group search range information from the first device. Further, the second device may correct the K path parameter groups based on the received path parameter group search range information, and perform channel estimation based on the K corrected path parameter groups.

It may be understood that a transmission periodicity of the path parameter group search range information sent by the first device sends to the second device may be T2, where T2 is determined by a sensing precision change. Specifically, a faster sensing precision change indicates a shorter periodicity T2, and a slower sensing precision change indicates a longer periodicity T2.

It should be noted that in this embodiment of this application, the transmission periodicity T1 of the K path parameter groups may be different from the transmission periodicity T2 of the path parameter group search range information. Generally, T1 may be greater than T2. In some feasible implementations, T1 may alternatively be less than T2. This is not limited herein. Optionally, in this embodiment of this application, the transmission periodicity T1 of the K path parameter groups may alternatively be the same as the transmission periodicity T2 of the path parameter group search range information. When T1 is the same as T2, the K path parameter groups and the path parameter group search range information may be sent by using one piece of signaling, or may be separately sent by using two pieces of signaling. This is specifically determined based on an actual application scenario, and is not limited herein.

It should be noted that in this embodiment of this application, the transmission periodicity T0 of the W reference path parameter groups is generally greater than the transmission periodicity T3 of the difference information. In this embodiment of this application, the transmission periodicity T2 of the path parameter group search range information is generally also greater than the transmission periodicity T3 of the difference information.

It should be noted that, in a downlink scenario, to be specific, when the first device is an access network device and the second device is a terminal device, the first device may notify the terminal device of configured T1, T2, and/or T3 by using signaling at a layer above a physical layer, for example, radio resource control (radio resource control, RRC) signaling. Alternatively, the first device may notify the terminal device of configured T1, T2, and/or T3 by using physical layer signaling, for example, downlink control information (downlink control information, DCI) signaling. This is not limited herein. It may be understood that the transmission periodicity (T1, T2, and/or T3) may be statically or semi-statically configured by using the signaling at the layer above the physical layer, and the transmission periodicity (T1, T2, and/or T3) may be configured in real time by using the physical layer signaling.

Optionally, the path parameter group search range information may alternatively be determined by the second device based on the K path parameter groups at a plurality of moments. For example, in a feasible implementation, the second device may obtain a standard deviation of path parameters based on historical empirical data. To be specific, the second device may calculate a standard deviation of path parameters in a first path parameter group at a plurality of historical moments, and further determine the path parameter group search range information based on $K$ standard deviations corresponding to the $K$ path parameter groups. The first path parameter group is any one of the $K$ path parameter groups. Optionally, the second device may alternatively perform theoretical derivation (for example, the cramer-rao lower bound (cramer-rao lower bound, CRLB) theory) based on a location error of a transceiver and an environment reconstruction error, to obtain search range information of path parameters. Further, the second device may correct the *K* path parameter groups based on the calculated path parameter group search range information, and perform channel estimation based on the *K* corrected path parameter groups.

Optionally, the path parameter group search range information may alternatively be pre-specified in a protocol. Therefore, the second device may correct the *K* path parameter groups based on the path parameter group search range information pre-specified in the protocol, and perform channel estimation based on the *K* corrected path parameter groups.

In a possible implementation, correcting the K path parameter groups based on the path parameter group search range information in this embodiment of this application may be understood as: calculating a group of path parameters based on a small quantity of measurement pilots within the given *K* path parameter groups and the path parameter group search range information, where an error between a pilot response obtained through calculation based on the group of path parameters and a pilot response obtained through measurement is the smallest.

Optionally, the terminal device may determine path parameter groups of *K* corrected communication paths according to a formula (1) and a formula (2), that is, determine the *K* corrected path parameter groups according to the formula (1) and the formula (2).

$$\arg\min_{(A_k,\tau_k)} \left\| \left[ \sum_{k=1}^{K} A_k \exp(-j2\pi f_{pilot}\tau_k) \right] - H(f_{pilot}) \right\|^2 \tag{1}$$

$$s.t. \left\| \mathbf{A} - \hat{\mathbf{A}} \right\|^2 < \varepsilon_1 \quad \left\| \boldsymbol{\tau} - \hat{\boldsymbol{\tau}} \right\|^2 < \varepsilon_2 \tag{2}$$

$H(f_{pilot})$ in the formula (1) is a first channel estimation value, $\sum_{k=1}^{K} A_k \exp(-j2\pi f_{pilot}\tau_k)$ in the formula (1) is a second channel estimation value, and $\arg\min_{(A_k,\tau_k)}(\cdot)$ is a value when 4 and $\tau_k$ enable $\left\| \left[ \sum_{k=1}^{K} A_k \exp(-j2\pi f_{pilot}\tau_k) \right] - H(f_{pilot}) \right\|^2$ to reach a minimum value. In the formula (2), $\mathbf{A}=[A_1,A_2,A_k]$, 4 in the formula (1) is a value in $A_1,A_2,\cdots A_K$, and $\mathbf{A}$ is a vector formed by amplitudes of the K corrected communication paths. $\hat{\mathbf{A}}=[\hat{A}_1,\hat{A}_2,\cdots,\hat{A}_K]$ is a vector formed by amplitudes of *K* communication paths, $\tau=[\tau_1,\tau_2,\cdots,\tau_K]$, $\tau_k$ in the formula (1) is a value in $\tau_1,\tau_2,\cdots,\tau_K$, $\tau$ is a vector formed by delays of the *K* corrected communication paths, $\hat{\tau}[\hat{\tau}_1,\hat{\tau}_2,\cdots\hat{\tau}_K]$ is a vector formed by delays of the *K* communication paths, $\varepsilon_1$ is a preset value corresponding to the amplitude, and $\varepsilon_2$ is a preset value corresponding to the delay. For example, $A_1$ and $\tau_1$ in $\mathbf{A}=[A_1,A_2,\cdots,A_K]$ and $\tau=[\tau_1,\tau_2,\cdots,\tau_K]$ that are obtained according to the formula (1) and the formula (2) are a path parameter group of a 1st communication path, $A_2$ and $\tau_2$ are a path parameter group of a 2nd communication path, ..., and 4 and $\tau_K$ are a path parameter group of a $K$th communication path. $\varepsilon_1$ is determined based on the delay search range information in the path parameter group search range information, and $\varepsilon_2$ is determined based on the attenuation search range information in the path parameter group search range information. The first channel estimation value is a channel estimation value obtained through measurement by using the small quantity of pilots, and the second channel estimation value is a channel estimation value obtained based on the *K* corrected path parameter groups corrected by using the small quantity of pilots. In other words, in this embodiment of this application, a small quantity of pilots need to be inserted into sent data to correct the path parameter.

Optionally, that the terminal device may determine path parameter groups of *K* corrected communication paths according to a formula (1) and a formula (2) includes: The terminal device may determine the path parameter groups of the *K* corrected communication paths according to the formula (1) and the formula (2) by using a maximum likelihood algorithm, a heuristic intelligent search method, or an exhaustive method.

It should be noted that, that the terminal device determines the path parameter group of each of the *K* communication paths according to the formula (1) and the formula (2) is for a case of single-input single-output of the network device and the terminal device. To be specific, the network device sends first data by using one antenna, and the terminal device receives the first data by using one antenna. In a multiple-input multiple-output (multiple-input multiple-output, MIMO) scenario, the network device may send first data by using a plurality of antennas, and the terminal device may receive the first data by using a plurality of antennas. For example, when the network device sends the first data by using M antennas, and the terminal device may receive the first data by using N antennas, the formula (1) may be changed to a formula (3), and the formula (2) may be changed to a formula (4).

$$\arg\min_{(A_k,\tau_k)} \left\| \left[ \sum_{k=1}^{K} A_k^{m,n} \exp(-j2\pi f_{pilot} \tau_k^{m,n}) \right] - H^{m,n}(f_{pilot}) \right\|^2 \tag{3}$$

$$s.t. \left\| \mathbf{A}^{m,n} - \hat{\mathbf{A}}^{m,n} \right\|^2 < \varepsilon_1^{m,n} \quad \left\| \boldsymbol{\tau}^{m,n} - \hat{\boldsymbol{\tau}}^{m,n} \right\|^2 < \varepsilon_2^{m,n} \tag{4}$$

$A_k^{m,n}$ in the formula (3) is an amplitude of a pilot sent by using an $m^{th}$ antenna in the M antennas of the network device and received by using an $n^{th}$ antenna in the N antennas of the terminal device, where m=[1, 2, ..., M], and n=[1, 2, ..., N]. $\tau_k^{m,n}$ is a delay of the pilot sent by using the $m^{th}$ antenna in the M antennas of the network device and received by using the $n^{th}$ antenna in the N antennas of the terminal device. $H^{m,n}(f_{pilot})$ in the formula (3) is a first channel estimation value of the pilot when the pilot is sent by using the $m^{th}$ antenna of the network device and received by using the $n^{th}$ antenna of the terminal device, and $\sum_{k=1}^{K} A_k^{m,n} \exp(-j2\pi f_{pilot} \tau_k^{m,n})$ in the formula (3) is a second channel estimation value of the pilot when the pilot is sent by using the $m^{th}$ antenna of the network device and received by using the $n^{th}$ antenna of the terminal device.

$\arg\min_{(A_k,\tau_k)}(\cdot)$ is a value when $A_k$ and $\tau_k$ enable $\left\| \left[ \sum_{k=1}^{K} A_k^{m,n} \exp(-j2\pi f_{pilot} \tau_k^{m,n}) \right] - H^{m,n}(f_{pilot}) \right\|^2$ to reach a minimum value. In the formula (4), $\mathbf{A}^{m,n} = [A_1^{m,n}, A_2^{m,n}, \cdots, A_K^{m,n}]$, $A_k^{m,n}$ in the formula (1) is a value in $A_1^{m,n}, A_2^{m,n}, \cdots, A_K^{m,n}$, and $\mathbf{A}^{m,n}$ is the vector formed by the amplitudes of the K corrected communication paths. $\hat{\mathbf{A}}^{m,n} = [\hat{A}_1^{m,n}, \hat{A}_2^{m,n}, \cdots, \hat{A}_K^{m,n}]$ is the vector formed by the amplitudes of the K communication paths, $\boldsymbol{\tau}^{m,n} = [\tau_1^{m,n}, \tau_2^{m,n}, \cdots, \tau_K^{m,n}]$, $\tau_k^{m,n}$ in the formula (1) is a value in $\tau_1^{m,n}, \tau_2^{m,n}, \cdots, \tau_K^{m,n}$, $\boldsymbol{\tau}^{m,n}$ is the vector formed by the delays of the K corrected communication paths, $\hat{\boldsymbol{\tau}}^{m,n} = [\hat{\tau}_1^{m,n}, \hat{\tau}_2^{m,n}, \cdots, \hat{\tau}_K^{m,n}]$ is the vector formed by the delays of the K communication paths, $\varepsilon_1^{m,n}$ is a preset value corresponding to the amplitude of the $m^{th}$ antenna of the network device and the $n^{th}$ antenna of the terminal device, and $\varepsilon_2$ is a preset value corresponding to the delay of the $m^{th}$ antenna of the network device and the $n^{th}$ antenna of the terminal device.

In some embodiments, when the network device sends the first data by using the M antennas, and the terminal device may receive the first data by using the N antennas, there are M*N antenna combinations in total, where M is an integer greater than 0, and N is an integer greater than 0. One antenna combination is a combination of one antenna of the network device and one antenna of the terminal device. For example, FIG. 6 is a diagram of a communication path in a downlink transmission scenario in a multi-antenna scenario according to an embodiment of this application. FIG. 6 shows a scenario in which the first data is sent by using one antenna combination. Each antenna combination corresponds to a same quantity of communication paths. In other words, even if the first data is sent by using different antenna combinations, because a transmit end is the network device, a receive end is the terminal device, and reflectors between the network device and the terminal device are the same, each antenna combination corresponds to a same quantity of communication paths. For example: If a $1^{st}$ antenna of the network device and a $1^{st}$ antenna of the terminal device correspond to one NLOS, a $2^{nd}$ antenna of the network device and the $1^{st}$ antenna of the terminal device correspond to one NLOS. In a possible implementation, the network device may sequentially determine a path parameter group of at least one communication path corresponding to each of the M*N antenna combinations, and then correct the path parameter group corresponding to each antenna combination. Alternatively, in another possible implementation, the network device may determine a path parameter group of an antenna path of another antenna combination based on a path parameter group of a communication path of one antenna combination, and correct a path parameter group corresponding to each antenna combination.

The following uses an example to describe how the network device determines the path parameter group of the antenna path of another antenna combination based on the path parameter group of the communication path of one antenna combination. The network device may determine, based on S201, that a path parameter group of K commu-

nication paths between the 1st antenna of the network device and the 1st antenna of the terminal device is $\{\tau_k^{1,1}, A_k^{1,1}, AOD_k^{1,1}, ZOD_k^{1,1}, AOA_k^{1,1}, ZOA_k^{1,1} \mid k \in [1,K]\}$, where a superscript (1, 1) represents the 1st antenna of the network device and the 1st antenna of the terminal device. In this case, for an m$^{th}$ antenna of the network device, a path parameter group of K communication paths of an n$^{th}$ antenna of the terminal device is $\{\tau_k^{m,n}, A_k^{m,n}, AOD_k^{m,n}, ZOD_k^{m,n}, AOA_k^{m,n}, ZOA_k^{m,n} \mid k \in [1,K]\}$.

$\{\tau_k^{m,n}, A_k^{m,n}, AOD_k^{m,n}, ZOD_k^{m,n}, AOA_k^{m,n}, ZOA_k^{m,n} \mid k \in [1,K]\}$ may be obtained based on $\{\tau_k^{1,1}, A_k^{1,1}, AOD_k^{1,1}, ZOD_k^{1,1}, AOA_k^{1,1}, ZOA_k^{1,1} \mid k \in [1,K]\}$.

$$\tau_k^{m,n} = \tau_k^{1,1} + \Delta\tau_k^{tx,m} + \Delta\tau_k^{rx,n} \tag{5}$$

$$\Delta\tau_k^{tx,m} = [(x_{tx}^m - x_{tx}^1)\sin(ZOD_k^{1,1})\cos(AOD_{k\ k}^{1,1}) + (y_{tx}^m - y_{tx}^1)\sin(ZOD_k^{1,1})\sin(AOD_k^{1,1}) +$$

$$(z_{tx}^m - z_{tx}^1)\cos(ZOD_k^{1,1})]/c \tag{6}$$

$$\Delta\tau_k^{rx,n} = [(x_{rx}^n - x_{rx}^1)\sin(ZOA_k^{1,1})\cos(AOA_k^{1,1}) + (y_{rx}^n - y_{rx}^1)\sin(ZOA_k^{1,1})\sin(AOA_k^{1,1}) +$$

$$(z_{rx}^n - z_{rx}^1)\cos(ZOA_k^{1,1})]/c \tag{7}$$

$$A_k^{m,n} = A_k^{1,1} \tag{8}$$

$$AOD_k^{m,n} = AOD_k^{1,1} \tag{9}$$

$$ZOD_k^{m,n} = ZOD_k^{1,1} \tag{10}$$

$$AOA_k^{m,n} = AOA_k^{1,1} \tag{11}$$

$$ZOA_k^{m,n} = ZOA_k^{1,1} \tag{12}$$

$\Delta\tau_k^{tx,m}$ in the foregoing formula (5) is a delay difference between the m$^{th}$ antenna and the 1st antenna of the network device, and $\Delta\tau_k^{rx,n}$ is a delay difference between the n$^{th}$ antenna and the 1st antenna of the terminal device. In other words, a delay $\tau_k^{m,n}$ of the m$^{th}$ antenna of the network device and the n$^{th}$ antenna of the terminal device may be obtained based on a sum of a delay $\tau_k^{1,1}$ of the 1st antenna of the network device and the 1st antenna of the terminal device, the delay difference $\Delta\tau_k^{tx,m}$ between the m$^{th}$ antenna and the 1st antenna of the network device, and the delay difference between the n$^{th}$ antenna and the 1st antenna of the terminal device. $x_{tx}^m$ for calculating $\Delta\tau_k^{tx,m}$ in the formula (6) is a coordinate of the m$^{th}$ antenna of the network device on an X axis, and $x_{tx}^1$ is a coordinate of the 1st antenna of the network device on the X axis. $y_{tx}^m$ is coordinate of the m$^{th}$ antenna of the network device on a Y axis, and $y_{tx}^1$ is a coordinate of the 1st antenna of the network device on the Y axis. $z_{tx}^m$ is a coordinate of the m$^{th}$ antenna of the network device on a Z axis, and $z_{tx}^1$ is a

coordinate of the 1st antenna of the network device on the Z axis. In the formula (6), $x_{tx}^m - x_{tx}^1$, $y_{tx}^m - y_{tx}^1$, and $z_{tx}^m - z_{tx}^1$ may be obtained based on a physical relationship between the mth antenna and the 1st antenna of the network device. $x_{rx}^n$ for calculating $\Delta\tau_k^{rx,n}$ in the formula (7) is a coordinate of the nth antenna of the terminal device on the X axis, and $x_{rx}^1$ is a coordinate of the 1st antenna of the terminal device on the X axis. $y_{rx}^n$ is a coordinate of the nth antenna of the terminal device on the Y axis, and $y_{rx}^1$ is a coordinate of the 1st antenna of the terminal device on the Y axis. $z_{rx}^n$ is a coordinate of the nth antenna of the terminal device on the Z axis, and $z_{rx}^1$ is a coordinate of the 1st antenna of the terminal device on the Z axis. In the formula (7), $x_{rx}^n - x_{rx}^1$, $y_{rx}^n - y_{rx}^1$, and $z_{rx}^n - z_{rx}^1$ may be obtained based on a physical relationship between the nth antenna and the 1st antenna of the terminal device. In other words, $\tau_k^{m,n}$ is determined based on $\tau_k^{1,1}$, $AOD_k^{1,1}$, $ZOD_k^{1,1}$, $AOA_k^{1,1}$, and $ZOA_k^{1,1}$. In the formula (8), an amplitude $A_k^{m,n}$ of a $k$th communication path between the mth antenna of the network device and the nth antenna of the terminal device is equal to $A_k^{1,1}$. In the formula (9), $AOD_k^{m,n}$ of the $k$th communication path between the mth antenna of the network device and the nth antenna of the terminal device is equal to $AOD_k^{1,1}$. In the formula (10), $ZOD_k^{m,n}$ of the $k$th communication path between the mth antenna of the network device and the nth antenna of the terminal device is equal to $ZOD_k^{1,1}$. In the formula (11), $AOA_k^{m,n}$ of the $k$th communication path between the mth antenna of the network device and the nth antenna of the terminal device is equal to $AOA_k^{1,1}$. In the formula (12), $ZOA_k^{m,n}$ of the $k$th communication path between the mth antenna of the network device and the nth antenna of the terminal device is equal to $ZOA_k^{1,1}$.

Optionally, performing channel estimation based on the K corrected path parameter groups in this embodiment of this application may be understood as: obtaining a channel response on each frequency through calculation based on the corrected path parameter. Herein, the path parameter corresponds to information about a channel. After the path parameter is obtained, channel responses on different frequencies may be derived. The single-input single-output is used as an example. $H(f) = \sum_{k=1}^{K} A_k \exp(-j2\pi f\tau_k)$, where f is a frequency, H(f) is a channel response on the corresponding frequency f, $k$ is a number of one of a plurality of paths, and K represents a total quantity of the plurality of paths. The number of one of the plurality of paths is used to identify one path parameter group.

It should be noted that, in a possible implementation, after the second device performs channel estimation, the second device may further demodulate, based on the channel estimation, communication data received by the second device. The communication data may be communication data sent by the first device to the second device. Optionally, the communication data may alternatively be communication data sent by another device (for example, the third device) to the second device, or the like. This is not limited herein. The first device is different from the third device.

For example, demodulating the communication data based on the channel estimation may be understood as: Y=HX+n, where X represents sent data, H represents a channel, Y represents received data, and n represents noise. When an estimated value of H and Y are given, an estimated value of X is obtained by using an algorithm. For example, a channel estimation algorithm is a least square (least square, LS) algorithm. To obtain the channel estimation Ĥ, the following cost function needs to be minimized for LS channel estimation:

$$J(\hat{\mathbf{H}}) = \|\mathbf{Y} - \mathbf{H}\hat{\mathbf{X}}\|^2.$$

It is assumed that $d$J(Ĥ)/$d$Ĥ=0. In this case, an optimal solution may be obtained:

$$\hat{\mathbf{H}}_{LS} = (X^H X)^{-1} X^H Y.$$

$\hat{\mathbf{H}}_{LS}$ is a result of the channel estimation.

In this embodiment of this application, the K path parameter groups are fed back for channel estimation, to reduce pilot overheads. Further, the path parameter group search range information is obtained to correct the *K* path parameter groups, to effectively reduce calculation complexity of the receive end. In addition, the *K* path parameter groups and the path parameter group search range information are updated by using different periodicities, to reduce feedback overheads. Optionally, a differential feedback manner is used for the *K* path parameter groups, to further reduce the feedback overheads.

It should be noted that, in addition to channel estimation, the path parameter group in this embodiment of this application may be further used for beam sweeping between the first device and the second device. For example, path parameters may be estimated based on TX and RX locations and environment information, and a plurality of paths are sorted based on strength of the path parameters. A path with strongest energy may be selected, and at least one of an *AOA,* a *ZOA,* an *AOD,* or a *ZOD* corresponding to the path with strongest energy is found. In this case, the transmit end may form a beam based on the *AOD* and/or the *ZOD* and transmit a signal, and the receive end forms a beam based on the *AOA* and/or the *ZOA* and receives the signal.

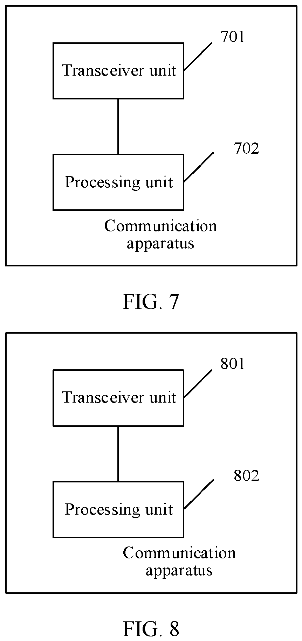

The following describes in detail communication apparatuses provided in this application with reference to FIG. 7 to FIG. 10.

FIG. 7 is a diagram of a structure of a communication apparatus according to an embodiment of this application. The communication apparatus shown in FIG. 7 may be configured to perform some or all functions of the first device in the method embodiment described in FIG. 3. The apparatus may be the first device, may be an apparatus in the first device, or may be an apparatus that can be used together with the first device. The communication apparatus may alternatively be a chip system. The communication apparatus shown in FIG. 7 may include a transceiver unit 701 and a processing unit 702. The processing unit 702 is configured to perform data processing. The transceiver unit 701 is integrated with a receiving unit and a sending unit. The transceiver unit 701 may also be referred to as a communication unit. Alternatively, the transceiver unit 701 may be split into a receiving unit and a sending unit. The descriptions of the processing unit 702 below are similar to those of the transceiver unit 701, and details are not described below again.

The processing unit 702 is configured to determine path parameter group search range information and first information, where the first information indicates K path parameter groups, and K is an integer greater than 0. The transceiver unit 701 is configured to send the path parameter group search range information and the first information to a second device, where the path parameter group search range information is used to correct the *K* path parameter groups, and *K* corrected path parameter groups are used for channel estimation.

In a possible implementation, the first information includes the K path parameter groups.

In a possible implementation, the first information includes W reference path parameter groups corresponding to W types of path parameter groups and difference information corresponding to each reference path parameter group, and W is a positive integer less than K. One type of path parameter group corresponds to one reference path parameter group, and the W types of path parameter groups are obtained by classifying the K path parameter groups.

In a possible implementation, a first-type path parameter group corresponds to a first reference path parameter group, the first-type path parameter group includes at least one path parameter group, the first-type path parameter group is any one of the W types of path parameter groups, and the first reference path parameter group is determined based on the at least one path parameter group.

In a possible implementation, the first reference path parameter group is one of the at least one path parameter group, or the first reference path parameter group is a path parameter group mean of the at least one path parameter group.

In a possible implementation, a transmission periodicity of the K path parameter groups is T1, and a transmission periodicity of the path parameter group search range information is T2, where T1 is different from T2.

In a possible implementation, a transmission periodicity of the W reference path parameter groups is T0, a transmission periodicity of the path parameter group search range information is T2, and a transmission periodicity of the difference information is T3, where T0 is greater than T3, and T2 is greater than T3.

In a possible implementation, one path parameter group includes at least one of the following parameters: a delay $\tau$, attenuation *A,* an azimuth of arrival *AOA,* a zenith of arrival *ZOA,* an azimuth of departure *AOD,* and a zenith of departure *ZOD.*

In a possible implementation, the path parameter group search range information includes at least one of the following information:
delay search range information, attenuation search range information, azimuth of arrival search range information, zenith of arrival search range information, azimuth of departure search range information, and zenith of departure search range information.

For another possible implementation of the communication apparatus, refer to related descriptions of the functions of the first device in the method embodiment corresponding to FIG. 3. Details are not described herein again.

FIG. 8 is a diagram of a structure of another communication apparatus according to an embodiment of this application. The communication apparatus shown in FIG. 8 may be configured to perform some or all functions of the second device in the method embodiment described in FIG. 3. The apparatus may be the second device, may be an apparatus in the second device, or may be an apparatus that can be used together with the second device. The communication apparatus may alternatively be a chip system. The communication apparatus shown in FIG. 8 may include a transceiver unit 801 and a processing unit 802.

The transceiver unit 801 is configured to receive first information from a first device, where the first information indicates $K$ path parameter groups, and $K$ is an integer greater than 0. The processing unit 802 is configured to: correct the K path parameter groups based on path parameter group search range information, and perform channel estimation based on K corrected path parameter groups.

In a possible implementation, the path parameter group search range information is configured by the first device; the path parameter group search range information is determined based on the $K$ path parameter groups at a plurality of moments; or the path parameter group search range information is pre-specified in a protocol.

In a possible implementation, the first information includes the $K$ path parameter groups.

In a possible implementation, the first information includes W reference path parameter groups corresponding to W types of path parameter groups and difference information corresponding to each reference path parameter group, and W is a positive integer less than $K$. One type of path parameter group corresponds to one reference path parameter group, and the W types of path parameter groups are obtained by classifying the $K$ path parameter groups.

In a possible implementation, a first-type path parameter group corresponds to a first reference path parameter group, the first-type path parameter group includes at least one path parameter group, the first-type path parameter group is any one of the W types of path parameter groups, and the first reference path parameter group is determined based on the at least one path parameter group.

In a possible implementation, the first reference path parameter group is one of the at least one path parameter group, or the first reference path parameter group is a path parameter group mean of the at least one path parameter group.

In a possible implementation, a transmission periodicity of the $K$ path parameter groups is T1, and a transmission periodicity of the path parameter group search range information is T2, where T1 is different from T2.

In a possible implementation, a transmission periodicity of the W reference path parameter groups is T0, a transmission periodicity of the path parameter group search range information is T2, and a transmission periodicity of the difference information is T3, where T0 is greater than T3, and T2 is greater than T3.

In a possible implementation, one path parameter group includes at least one of the following parameters: a delay $\tau$, attenuation $A$, an azimuth of arrival $AOA$, a zenith of arrival $ZOA$, an azimuth of departure $AOD$, and a zenith of departure $ZOD$.

In a possible implementation, the path parameter group search range information includes at least one of the following information:

delay search range information, attenuation search range information, azimuth of arrival search range information, zenith of arrival search range information, azimuth of departure search range information, and zenith of departure search range information.

For another possible implementation of the communication apparatus, refer to related descriptions of the functions of the second device in the method embodiment corresponding to FIG. 3. Details are not described herein again.

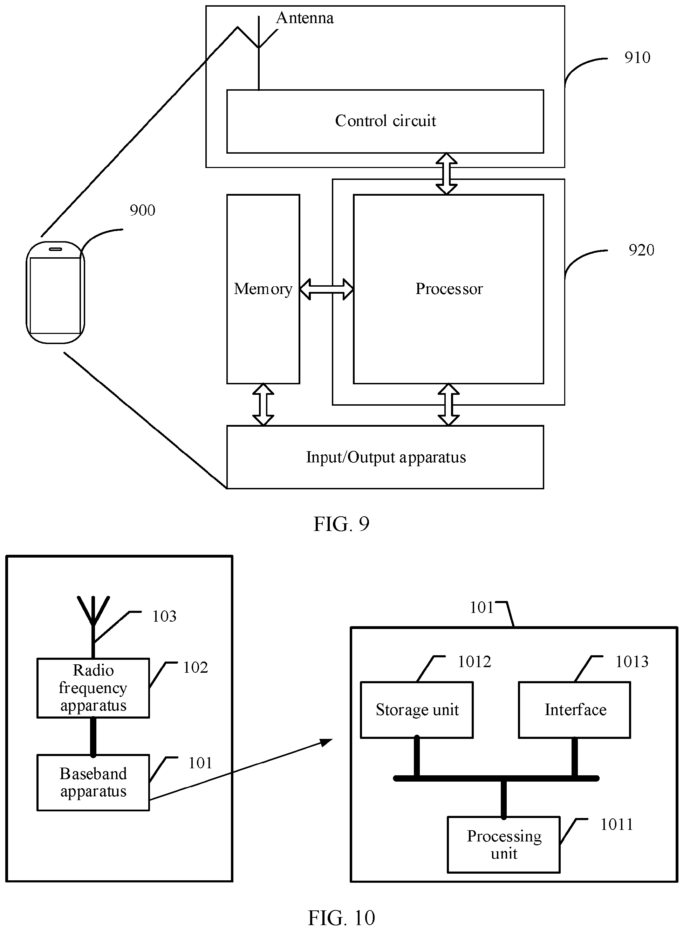

FIG. 9 is a diagram of a structure of another communication apparatus according to an embodiment of this application. As shown in FIG. 9, the communication apparatus may be the second device described in embodiments of this application, and is configured to implement functions of the second device in FIG. 3. The second device may be an access network device, or may be a terminal device. For ease of description, FIG. 9 shows only main components of a terminal device 900. As shown in FIG. 9, the terminal device 900 includes a processor, a memory, a control circuit, an antenna, and an input/output apparatus. The processor is mainly configured to: process a communication protocol and communication data, control the entire terminal device 900, execute a software program, and process data of the software program. The memory is mainly configured to store the software program and the data. The control circuit is mainly configured to: perform conversion between a baseband signal and a radio frequency signal, and process the radio frequency signal. The antenna is mainly configured to send and receive the radio frequency signal in a form of an electromagnetic wave. The input/output apparatus, for example, a touchscreen, a display, a microphone, or a keyboard, is mainly configured to receive data input by a user and output data to the user.

For example, the terminal device 900 is a mobile phone. After the terminal device 900 is powered on, the processor may read a software program in a storage unit, explain and execute instructions of the software program, and process data of the software program. When data needs to be sent wirelessly, the processor performs baseband processing on the to-be-sent data, and then outputs a baseband signal to the control circuit. The control circuit performs radio frequency processing on the baseband signal, and then sends a radio frequency signal to the outside in the form of an electromagnetic wave through the antenna. When data is sent to the terminal device 900, the control circuit receives the radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 9 shows only one memory and one processor. In some embodiments, the terminal device 900 may include a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to: control the entire terminal device 900, execute the software program, and process the data of the software program. Functions of the baseband processor and the central processing unit are integrated into the processor in FIG. 9. A person skilled in the art may understand that the baseband processor and the central processing unit each may be an independent processor, and are interconnected by using a technology such as a bus. The terminal device 900 may include a plurality of baseband processors to adapt to different network standards, and the terminal device 900 may include a plurality of central processing units to enhance a processing capability of the terminal device 900. The components of the terminal device 900 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have sending and receiving functions may be considered as a transceiver unit 910 of the terminal device 900, and the processor having a processing function may be considered as a processing unit 920 of the terminal device 900. As shown in FIG. 9, the terminal device 900 includes the transceiver unit 910 and the processing unit 920. The transceiver unit may also be referred to as a transceiver, a transceiver machine, a transceiver apparatus, or the like. Optionally, a component that is in the transceiver unit 910 and that is configured to implement the receiving function may be considered as a receiving unit, and a component that is in the transceiver unit 910 and that is configured to implement the sending function may be considered as a sending unit. That is, the transceiver unit 910 includes the receiving unit and the sending unit. For example, the receiving unit may also be referred to as a receiver machine, a receiver, a receiver circuit, or the like. The sending unit may be referred to as a transmitter machine, a transmitter, a transmitter circuit, or the like.

FIG. 10 is a diagram of a structure of another communication apparatus according to an embodiment of this application. As shown in FIG. 10, the communication apparatus may be the first device described in embodiments of this application, and is configured to implement functions of the first device in FIG. 3. The first device may be an access network device, or may be a terminal device. For ease of description, FIG. 10 is mainly described by using an example in which the first device is an access network device. The first device includes a baseband apparatus 101, a radio frequency apparatus 102, and an antenna 103. In an uplink direction, the radio frequency apparatus 102 receives, through the antenna 103, information sent by the terminal device, and sends the information sent by the terminal device to the baseband apparatus 101 for processing. In a downlink direction, the baseband apparatus 101 processes information from the terminal device and sends processed information to the radio frequency apparatus 102, and the radio frequency apparatus 102 processes the information from the terminal device and then sends processed information to the terminal device through the antenna 103.

The baseband apparatus 101 includes one or more processing units 1011, a storage unit 1012, and an interface 1013. The processing unit 1011 is configured to support the network device in performing functions of the network device in the foregoing method embodiments. The storage unit 1012 is configured to store a software program and/or data. The interface 1013 is configured to exchange information with the radio frequency apparatus 102. The interface includes an interface circuit, and is configured to input and output information. In an implementation, the processing unit is an integrated circuit, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of such integrated circuits. These integrated circuits may be integrated together to form a chip. The storage unit 1012 may be located in a same chip as the processing unit 1011, that is, an on-chip storage element. Alternatively, the storage unit 1012 may be located on a different chip from the processing unit 1011, that is, an off-chip storage element. The storage unit 1012 may be one memory, or may be a collective name of a plurality of memories or storage elements.

The first device may implement some or all of the steps in the foregoing method embodiments in a form of scheduling programs by using one or more processing units, for example, implement corresponding functions of the network device in FIG. 3. The one or more processing units may support radio access technologies of a same standard, or may support radio access technologies of different standards.

An embodiment of this application further provides a computer-readable storage medium. The computer-readable storage medium stores instructions, and when the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with the examples described in embodiments disclosed in this specification, units and steps may be implemented by electronic hardware or a combination of computer software and electronic hardware. Whether these functions are executed by hardware or software depends on particular applications and design constraints of the technical solutions. A person skilled in the art may use different methods to implement the described functions for each particular application, but it should not be considered that the implementation goes beyond the scope of this application.

In several embodiments provided in this application, it should be understood that the disclosed systems, apparatuses, and methods may be implemented in other manners. For example, the described apparatus embodiments are merely examples. For example, division into the units is merely logical function division. The units described as separate components may or may not be physically separate, and components displayed as units may or may not be physical units, may be located at one location, or may be distributed on a plurality of network units. Some or all of the units may be selected based on actual requirements to achieve objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc storage, a magnetic disk storage medium or another magnetic storage device, or any other medium that can be used to carry or store expected program code in a form of instructions or a data structure and that can be accessed by the computer. In addition, by way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall in the protection scope of embodiments of this application. Therefore, the protection scope of embodiments of this application shall be subject to the protection scope of the claims.

**Claims**

1. A communication method, comprising:

   determining, by a first device, path parameter group search range information and first information, wherein the first information indicates $K$ path parameter groups, and $K$ is an integer greater than 0; and
   sending, by the first device, the path parameter group search range information and the first information to a second device, wherein
   the path parameter group search range information is used to correct the K path parameter groups, and K corrected path parameter groups are used for channel estimation.

2. A communication method, comprising:

   receiving, by a second device, first information from a first device, wherein the first information indicates $K$ path parameter groups, and $K$ is an integer greater than 0; and
   correcting, by the second device, the K path parameter groups based on path parameter group search range information, and performing channel estimation based on K corrected path parameter groups.

3. The method according to claim 2, wherein

   the path parameter group search range information is configured by the first device;
   the path parameter group search range information is determined based on the K path parameter groups at a plurality of moments; or
   the path parameter group search range information is pre-specified in a protocol.

4. The method according to any one of claims 1 to 3, wherein the first information comprises the K path parameter groups.

5. The method according to any one of claims 1 to 3, wherein the first information comprises W reference path parameter groups corresponding to W types of path parameter groups and difference information corresponding to each reference path parameter group, and W is a positive integer less than K, wherein one type of path parameter group corresponds to one reference path parameter group, and the W types of path parameter groups are obtained by classifying the K path parameter groups.

6. The method according to claim 5, wherein a first-type path parameter group corresponds to a first reference path parameter group, the first-type path parameter group comprises at least one path parameter group, the first-type path parameter group is any one of the W types of path parameter groups, and the first reference path parameter group is determined based on the at least one path parameter group.

7. The method according to claim 6, wherein the first reference path parameter group is one of the at least one path parameter group, or the first reference path parameter group is a path parameter group mean of the at least one path parameter group.

8. The method according to claim 4, wherein a transmission periodicity of the K path parameter groups is T1, and a transmission periodicity of the path parameter group search range information is T2, wherein T1 is different from T2.

9. The method according to any one of claims 5 to 7, wherein a transmission periodicity of the W reference path parameter groups is T0, a transmission periodicity of the path parameter group search range information is T2, and a transmission periodicity of the difference information is T3, wherein T0 is greater than T3, and T2 is greater than T3.

10. The method according to any one of claims 1 to 9, wherein one path parameter group comprises at least one of the following parameters:
    a delay $\tau$, attenuation $A$, an azimuth of arrival $AOA$, a zenith of arrival $ZOA$, an azimuth of departure $AOD$, and a zenith of departure $ZOD$.

11. The method according to any one of claims 1 to 10, wherein the path parameter group search range information comprises at least one of the following information:
    delay search range information, attenuation search range information, azimuth of arrival search range information, zenith of arrival search range information, azimuth of departure search range information, and zenith of departure search range information.

12. A communication apparatus, wherein the apparatus is a first device and comprises:

    a processing unit, configured to determine path parameter group search range information and first information, wherein the first information indicates $K$ path parameter groups, and $K$ is an integer greater than 0; and
    a transceiver unit, configured to send the path parameter group search range information and the first information to a second device, wherein
    the path parameter group search range information is used to correct the K path parameter groups, and K corrected path parameter groups are used for channel estimation.

13. A communication apparatus, wherein the apparatus is used in a second device and comprises:

    a transceiver unit, configured to receive first information from a first device, wherein the first information indicates $K$ path parameter groups, and $K$ is an integer greater than 0; and
    a processing unit, configured to: correct the K path parameter groups based on path parameter group search range information, and perform channel estimation based on K corrected path parameter groups.

14. The apparatus according to claim 13, wherein

   the path parameter group search range information is configured by the first device;
   the path parameter group search range information is determined based on the K path parameter groups at a plurality of moments; or
   the path parameter group search range information is pre-specified in a protocol.

15. The apparatus according to any one of claims 12 to 14, wherein the first information comprises the K path parameter groups.

16. The apparatus according to any one of claims 12 to 14, wherein the first information comprises W reference path parameter groups corresponding to W types of path parameter groups and difference information corresponding to each reference path parameter group, and W is a positive integer less than K, wherein one type of path parameter group corresponds to one reference path parameter group, and the W types of path parameter groups are obtained by classifying the $K$ path parameter groups.

17. The apparatus according to claim 16, wherein a first-type path parameter group corresponds to a first reference path parameter group, the first-type path parameter group comprises at least one path parameter group, the first-type path parameter group is any one of the W types of path parameter groups, and the first reference path parameter group is determined based on the at least one path parameter group.

18. The apparatus according to claim 17, wherein the first reference path parameter group is one of the at least one path parameter group, or the first reference path parameter group is a path parameter group mean of the at least one path parameter group.

19. The apparatus according to claim 15, wherein a transmission periodicity of the K path parameter groups is T1, and a transmission periodicity of the path parameter group search range information is T2, wherein T1 is different from T2.

20. The apparatus according to any one of claims 16 to 18, wherein a transmission periodicity of the W reference path parameter groups is T0, a transmission periodicity of the path parameter group search range information is T2, and a transmission periodicity of the difference information is T3, wherein T0 is greater than T3, and T2 is greater than T3.

21. The apparatus according to any one of claims 12 to 20, wherein one path parameter group comprises at least one of the following parameters:
   a delay $\tau$, attenuation $A$, an azimuth of arrival $AOA$, a zenith of arrival $ZOA$, an azimuth of departure $AOD$, and a zenith of departure $ZOD$.

22. The apparatus according to any one of claims 12 to 21, wherein the path parameter group search range information comprises at least one of the following information:
   delay search range information, attenuation search range information, azimuth of arrival search range information, zenith of arrival search range information, azimuth of departure search range information, and zenith of departure search range information.

23. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 11 by using a logic circuit or by executing instructions.

24. A computer-readable storage medium, wherein the storage medium stores a computer program or instructions, and when the computer program or the instructions are executed by a computer, the method according to any one of claims 1 to 11 is performed.

25. A computer program product, comprising a computer program, wherein when the computer program is run on a computer, the method according to any one of claims 1 to 11 is performed.

FIG. 1

FIG. 2

S301: First information

S302: Correct $K$ path parameter groups based on path parameter group search range information, and perform channel estimation based on $K$ corrected path parameter groups

FIG. 3

FIG. 4

FIG. 5

FIG. 6

701

Transceiver unit

702

Processing unit

Communication
apparatus

FIG. 7

801

Transceiver unit

802

Processing unit

Communication
apparatus

FIG. 8

FIG. 9

FIG. 10

## INTERNATIONAL SEARCH REPORT

International application No.

**PCT/CN2023/097181**

### A. CLASSIFICATION OF SUBJECT MATTER

H04L25/02(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP; IEEE: 指示信息, 路径参数, 环境信息, 位置, 直视径, 信道估计, 校正, 搜索范围, 搜索空间, 时延, 衰减, 方位角, 反射点, NLOS, LOS, AOA, ZOA, search space, channel estimation

### C. DOCUMENTS CONSIDERED TO BE RELEVANT

| Category* | Citation of document, with indication, where appropriate, of the relevant passages | Relevant to claim No. |
|---|---|---|
| X | CN 111193679 A (COMMUNICATION UNIVERSITY OF CHINA) 22 May 2020 (2020-05-22)<br>description, paragraphs [0064]-[0143] | 1-25 |
| A | CN 111431638 A (TELECOMMUNICATIONS SCIENCE AND TECHNOLOGY RESEARCH INSTITUTE CO., LTD.) 17 July 2020 (2020-07-17)<br>entire document | 1-25 |
| A | CN 111521969 A (NORTHWESTERN POLYTECHNIC UNIVERSITY) 11 August 2020 (2020-08-11)<br>entire document | 1-25 |
| A | CN 113225274 A (XI'AN YUFEI ELECTRONIC TECHNOLOGY CO., LTD.) 06 August 2021 (2021-08-06)<br>entire document | 1-25 |
| A | LG ELECTRONICS. "Discussion on Fine Time/Frequency Tracking of Channel"<br>*3GPP TSG RAN WG1 Meeting #88bis R1-1704894,*<br>No. TSGR1_88b, 25 March 2017 (2017-03-25),<br>entire document | 1-25 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 August 2023** | **18 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/097181**

| Patent document cited in search report | | | Publication date (day/month/year) | Patent family member(s) | | | Publication date (day/month/year) |
|---|---|---|---|---|---|---|---|
| CN | 111193679 | A | 22 May 2020 | CN | 111193679 | B | 19 April 2022 |
| CN | 111431638 | A | 17 July 2020 | CN | 111431638 | B | 22 March 2022 |
| CN | 111521969 | A | 11 August 2020 | CN | 111521969 | B | 05 July 2022 |
| CN | 113225274 | A | 06 August 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210620651